# EUROPEAN PATENT APPLICATION

(11) **EP 4 848 197 A1**
(43) Date of publication of application: **02.12.2026**
(21) Application number: 25797806.4
(22) Date of filing: 15.04.2025
(51) Int. Cl.: G06T 5/50, G06T 7/10, G06T 5/70, G06T 5/60, G06N 3/0475, G06N 3/045, G06N 3/0495, G06N 3/08

(54) **IMAGE COMPOSITION METHOD AND ELECTRONIC DEVICE FOR PERFORMING METHOD**

(30) Priority: 29.04.2024 KR 20240057201; 12.08.2024 KR 20240107776
(71) Applicant: Samsung Electronics Co., Ltd., Suwon-si, Gyeonggi-do 16677 (KR)
(72) Inventor: KIM, Jeewook, Suwon-si, Gyeonggi-do 16677 (KR); KWON, Keunjoo, Suwon-si, Gyeonggi-do 16677 (KR)
(74) Representative: Gulde & Partner
(86) International application number: PCT/KR2025/005073
(87) International publication number: WO 2025/230181

(57) **Abstract**

Provided is a method, performed by an electronic device, of composing an image. The method includes obtaining information about a target region within a first image, segmenting an object included in a second image, generating a pasted image by pasting an image of the segmented object to the target region of the first image, based on the information about the target region, generating a composed image by using a diffusion model configured to use, as input data, the pasted image and a mask image that corresponds to the segmented object, and outputting the composed image, wherein the diffusion model is further configured to apply different image generation strengths to respective regions of an image, based on a variance of a pixel prediction space.

## Description

### Technical Field

The disclosure relates to a method of composing an image, and an electronic device and server for performing the method.

### Background Art

Generative artificial intelligence (AI) is a technology for learning structures and patterns of large-scale data to generate new synthetic data based on input data. This technology enables generation of human-level results for various tasks associated with text, images, audio, video, music, and the like. For example, image generative models generate a new image based on given data (e.g., text or images).

When using a generative model to compose an image from multiple images, the overall process of the generative model is probabilistic, making it difficult to obtain a harmoniously composed output image while preserving the same identity as the input.

### Disclosure of Invention

### Solution to Problem

According to an aspect of the disclosure, there may be provided a method, performed by an electronic device, of composing an image. The method may include obtaining information about a target region within a first image. The method may include segmenting an object included in a second image. The method may include generating a pasted image by pasting an image of the segmented object to the target region of the first image, based on the information about the target region. The method may include generating a composed image by using a diffusion model configured to use, as input data, the pasted image and a mask image that corresponds to the segmented object. The method may include outputting the composed image. The diffusion model may be further configured to apply different image generation strengths to respective regions of an image, based on a variance of a pixel prediction space.

According to an aspect of the disclosure, there may be provided an electronic device for composing an image. The electronic device may include a communication interface, memory, comprising one or more storage media, storing instructions, and at least one processor communicatively coupled to the communication interface and the memory. The electronic device may include a display. The instructions may, when executed by the at least one processor, cause the electronic device to obtain information about a target region within a first image. The instructions may, when executed by the at least one processor, cause the electronic device to segment an object included in a second image. The instructions may, when executed by the at least one processor, cause the electronic device to generate a pasted image by pasting an image of the segmented object to the target region of the first image, based on the information about the target region. The instructions may, when executed by the at least one processor, cause the electronic device to generate a composed image by using a diffusion model configured to use, as input data, the pasted image and a mask image that corresponds to the segmented object. The instructions may, when executed by the at least one processor, cause the electronic device to output the composed image. The instructions may, when executed by the at least one processor, cause the electronic device to control the display to output the composed image. The diffusion model may be further configured to apply different image generation strengths to respective regions of an image, based on a variance of a pixel prediction space.

According to an aspect of the disclosure, there may be provided a method, performed by a server, of composing an image. The method may include obtaining information about a target region within a first image. The method may include segmenting an object included in a second image. The method may include generating a pasted image by pasting an image of the segmented object to the target region of the first image, based on the information about the target region. The method may include generating a composed image by using a diffusion model configured to use, as input data, the pasted image and a mask image that corresponds to the segmented object. The method may include outputting the composed image. The diffusion model may be further configured to apply different image generation strengths to respective regions of an image, based on a variance of a pixel prediction space.

According to an aspect of the disclosure, there may be provided a server for composing an image. The server may include a communication interface, memory, comprising one or more storage media, storing instructions, and at least one processor communicatively coupled to the communication interface and the memory. The instructions may, when executed by the at least one processor, cause the server to obtain information about a target region within a first image. The instructions may, when executed by the at least one processor, cause the server to segment an object included in a second image. The instructions may, when executed by the at least one processor, cause the server to generate a pasted image by pasting an image of the segmented object to the target region of the first image, based on the information about the target region. The instructions may, when executed by the at least one processor, cause the server to generate a composed image by using a diffusion model configured to use, as input data, the pasted image and a mask image that corresponds to the segmented object. The instructions may, when executed by the at least one processor, cause the server to output the composed image. The diffusion model may be further configured to apply different image generation strengths to respective regions of an image, based on a variance of a pixel prediction space.

According to an aspect of the disclosure, there may be provided a computer-readable recording medium having recorded thereon a program for causing an electronic device and/or a server to execute any one of methods of generating and providing a composed image as described above or below.

### Brief Description of Drawings

FIG. 1 is a diagram for describing an example of generation of a composed image, according to an embodiment of the disclosure.
FIG. 2 is a flowchart for describing an operation, performed by an electronic device, of providing a composed image, according to an embodiment of the disclosure.
FIG. 3A is a diagram for describing an example in which an electronic device generates a composed image by using a diffusion model, according to an embodiment of the disclosure.
FIG. 3B is a diagram for further describing features of the diffusion model illustrated in FIG. 3A, according to an embodiment of the disclosure.
FIG. 4 is a diagram for describing an operation, performed by an electronic device, of generating input data for a diffusion model, according to an embodiment of the disclosure.
FIG. 5A is a diagram for describing an example in which an electronic device generates a composed image, according to an embodiment of the disclosure.
FIG. 5B is a diagram for describing an example in which an electronic device generates a composed image, according to an embodiment of the disclosure.
FIG. 6A is a diagram for describing an example in which an electronic device generates a composed image, according to an embodiment of the disclosure.
FIG. 6B is a diagram for describing an example in which an electronic device generates a composed image, according to an embodiment of the disclosure.
FIG. 7 is a diagram for describing an example in which an electronic device generates a composed image, according to an embodiment of the disclosure.
FIG. 8 is a diagram for describing an example in which an electronic device generates a composed image, according to an embodiment of the disclosure.
FIG. 9 is a diagram for describing an example in which an electronic device generates a composed image by using a diffusion model, according to an embodiment of the disclosure.
FIG. 10 is a block diagram illustrating a configuration of an electronic device according to an embodiment of the disclosure.
FIG. 11 is a flowchart for describing an electronic device operating in conjunction with a server, according to an embodiment of the disclosure.
FIG. 12 is a block diagram illustrating a configuration of a server according to an embodiment of the disclosure.

### Mode for the Invention

The terms used herein will be briefly described, and then the disclosure will be described in detail. As used herein, the expression "at least one of a, b, or c" may indicate only a, only b, only c, both a and b, both a and c, both b and c, all of a, b, and c, or variations thereof.

Although the terms used herein are selected from among common terms that are currently widely used in consideration of their functions in the disclosure, the terms may be different according to an intention of one of ordinary skill in the art, a precedent, or the advent of new technology. In addition, in certain cases, there are also terms arbitrarily selected by the applicant, and in this case, the meaning thereof will be defined in detail in the description. Therefore, the terms used herein are not merely designations of the terms, but the terms are defined based on the meaning of the terms and content throughout the disclosure.

The singular expression may also include the plural meaning as long as it is not inconsistent with the context. All the terms used herein, including technical and scientific terms, may have the same meanings as those generally understood by those of skill in the art related to the specification. In addition, although the terms such as 'first' or 'second' may be used in the specification so as to describe various elements, these elements should not be limited by the terms. These terms are only used to distinguish one element from another element.

Throughout the specification, when a part "includes" a component, it means that the part may additionally include other components rather than excluding other components as long as there is no particular opposing recitation. In addition, as used herein, the terms such as "...er (or)", "... unit", "... module", etc., denote a unit that performs at least one function or operation, which may be implemented as hardware or software or a combination thereof.

Hereinafter, an embodiment of the disclosure will be described in detail with reference to the accompanying drawings to allow those of skill in the art to easily carry out the embodiment. The disclosure may, however, be embodied in many different forms and should not be construed as being limited to an embodiment set forth herein. In addition, in order to clearly describe the disclosure, portions that are not relevant to the description of the disclosure are omitted, and similar reference numerals are assigned to similar elements throughout the specification.

Hereinafter, the disclosure will be described in detail with reference to the accompanying drawings.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a wireless fidelity (Wi-Fi) chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

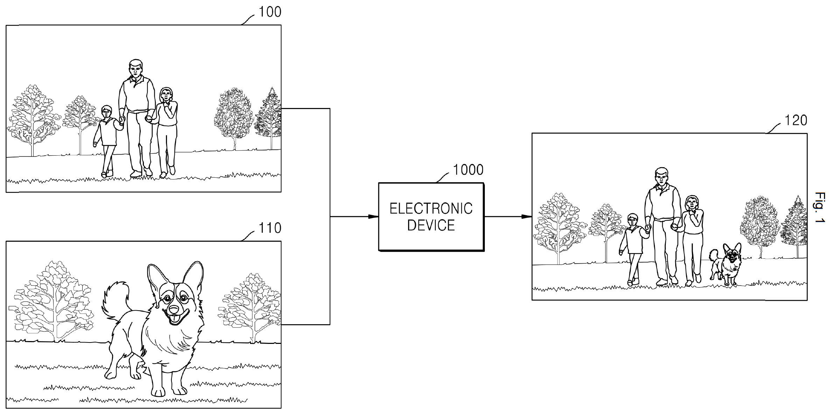

FIG. 1 is a diagram for describing an example of generation of a composed image, according to an embodiment of the disclosure.

In an embodiment of the disclosure, an electronic device 1000 may provide a user with a service of composing an image by using a generative model. For example, the electronic device 1000 may generate a composed image 120 based on a first image 100 (e.g., a background image) and a second image 110 (e.g., an object image) by using the generative model, and provide the composed image 120 to the user. The user of the electronic device 1000 may select the first image 100, the second image 110, and a target region indicating a region where composition is to be performed. The electronic device 1000 may generate the composed image 120 based on a user input by using the generative model, and provide the composed image 120 to the user.

In an embodiment of the disclosure, the composed image 120 provided by the electronic device 1000 may show a composition result in which a background and an object are naturally harmonized within the composed image 120 while preserving the identity of each of the first image 100 and the second image 110, which are the input images. To this end, the electronic device 1000 may use a generative model of the disclosure, which is specialized for generating a natural composition result while preserving the identity of an input image. That the identity of the input image is preserved may mean that visual features included in the input image (e.g., the first image 100 or the second image 110), which is the original image, are preserved in the composition result.

In an embodiment of the disclosure, the generative model may be an image-to-image artificial intelligence model configured to receive an image as input and output a generated image. In the disclosure, the generative model may be implemented based on a diffusion model. Thus, hereinafter, the generative model of the disclosure will be referred to as a diffusion model.

The diffusion model may be trained through a forward diffusion process that gradually adds noise and a reverse diffusion process that predicts and removes noise, and the trained diffusion model may generate a new image by generating initial noise, predicting noise from the initial noise, and removing the noise. In this case, the diffusion model may generate an image with reference to input data (e.g., an image).

The image composition technology of the disclosure enables generation of an image through a diffusion model that applies learnable variances. A learnable variance may also be referred to as the variance of a pixel prediction space. The diffusion model may generate a natural composition result while preserving the identity of an input image, by applying different image generation strengths to respective regions of the image, based on the variance of the pixel prediction space.

In an embodiment of the disclosure, the electronic device 1000 may be various types of devices capable of generating and providing the composed image 120. For example, the electronic device 1000 may be implemented as various types and forms of electronic devices including a display. The electronic device 1000 may include, but is not limited to, devices capable of displaying an image through a display, such as a smart television (TV), a smart phone, a tablet personal computer (PC), a laptop PC, a glasses-type display, or a head-mounted display. As another example, the electronic device 1000 may be implemented as various types and forms of electronic devices capable of connecting to a display in a wired or wireless manner. For example, the electronic device 1000 may include, but is not limited to, devices capable of connecting to a display in a wired or wireless manner and displaying an image through the display, such as a set-top box, a desktop PC, or a server.

Detailed operations in which the electronic device 1000 provides the composed image 120 to the user will be described in more detail below with reference to the drawings.

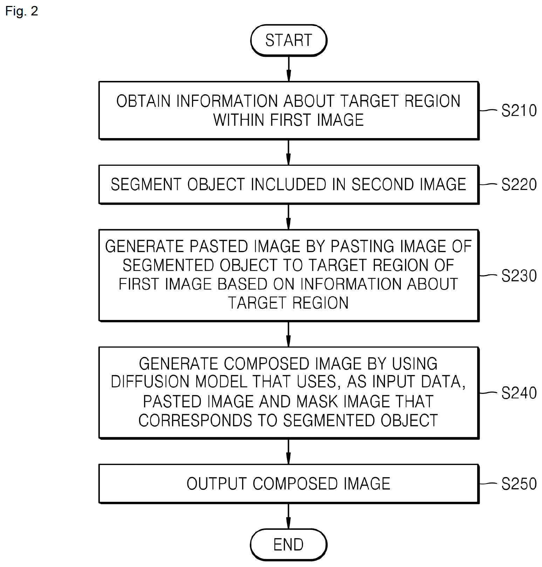

FIG. 2 is a flowchart for describing an operation, performed by an electronic device, of providing a composed image, according to an embodiment of the disclosure.

With reference to FIG. 2, operations, performed by the electronic device 1000, of generating and providing a composed image will be briefly described, and a detailed description of each of the operations will be provided with reference to the following drawings.

In operation S210, the electronic device 1000 may obtain information about a target region in a first image. The first image may be a background image of a 'combined image', which is input data for a diffusion model that performs an image composition (or image editing, image generation) operation. In addition, the target region may be a region determined within the first image, and may refer to a region where a new image (e.g., a second image or a portion of the second image) is to be pasted.

In an embodiment of the disclosure, the electronic device 1000 may obtain the first image. For example, the electronic device 1000 may provide an image loading function that allows selection of one of images stored in a media storage unit of the electronic device 1000. The electronic device 1000 may obtain a user input for selecting the first image from among one or more images stored in the electronic device 1000. The images stored in the electronic device 1000 may include images captured by using a camera of the electronic device 1000, and images received from an external source (e.g., images downloaded from a public domain or images received from another electronic device). As another example, the electronic device 1000 may obtain, as the first image, an image captured by using a camera and then displayed on a screen of the electronic device 1000 in real time. Based on identifying a request to execute an image composition function, the electronic device 1000 may capture a first image, which is being captured and displayed on the screen in real time.

In an embodiment of the disclosure, the electronic device 1000 may receive a user input for selecting a target region in the first image. Based on a user input (e.g., a rectangular selection or a freehand selection such as a lasso selection) for specifying a region with respect to the first image, the electronic device 1000 may obtain information about the target region in the first image. The information about the target region may include a position, a size, and the like of the target region, but is not limited thereto. The information about the target region may include, for example, bounding box coordinates (for a rectangular selection) or pixel coordinates indicating a boundary of the selected region (for a freehand selection), but is not limited thereto.

In operation S220, the electronic device 1000 may segment an object included in a second image. The second image may be an object image including an object to be included in a 'combined image,' which is input data for the diffusion model that performs an image composition (or image editing, image generation) operation.

In an embodiment of the disclosure, the electronic device 1000 may obtain the second image. For example, the electronic device 1000 may load the second image based on a user input for selecting one of the images stored in the media storage unit.

In an embodiment of the disclosure, the electronic device 1000 may receive a user input for selecting an object (or a partial region of the second image) in the second image. The electronic device 1000 may identify a region in the second image corresponding to the user input and segment an object in the identified region. For example, the electronic device 1000 may isolate an object from a background through techniques such as thresholding or boundary detection. As another example, the electronic device 1000 may isolate an object by using artificial intelligence-based segmentation techniques (e.g., instance segmentation).

In operation S230, the electronic device 1000 may generate a pasted image by pasting the image of the segmented object to the target region of the first image based on the information about the target region.

In an embodiment of the disclosure, the electronic device 1000 may adjust the size of the image of the segmented object based on the information about the target region. For example, the electronic device 1000 may increase or decrease the size of the image of the segmented object based on the information about the target region. For example, the electronic device 1000 may adjust the shape of the boundary line of the image of the segmented object to correspond to the shape of the boundary line of the target region, based on the information about the target region.

In an embodiment of the disclosure, when generating the pasted image, the electronic device 1000 may remove pixel information about a region other than the region of the segmented object within the target region (the target region of the first image) of the pasted image.

In operation S240, the electronic device 1000 may generate a composed image by using a diffusion model that uses, as input data, the pasted image and a mask image that corresponds to the segmented object.

In an embodiment of the disclosure, the diffusion model may be an example of generative artificial intelligence that processes input data to generate new data. The diffusion model may be implemented by using various deep neural network architectures and algorithms that adopt a diffusion process, or may be implemented through variations of various deep neural network architectures and algorithms that adopt a diffusion process. The diffusion model may refer to a model that learns features of an image through a forward diffusion process that adds noise to an original image for each time step and a reverse diffusion process that restores the original image by removing noise from (denoising) a noise image for each time step.

In an embodiment of the disclosure, the generated composed image may show a composition result in which a background and an object are naturally harmonized within the composed image while preserving the identity of each of a background image (e.g., the first image) and an object image (e.g., the second image) included in the pasted image. To this end, the diffusion model of the disclosure may be designed and implemented to apply a strategy for obtaining a natural composition result while preserving the identity of source images (e.g., the first image and the second image). One or more composed images may be generated.

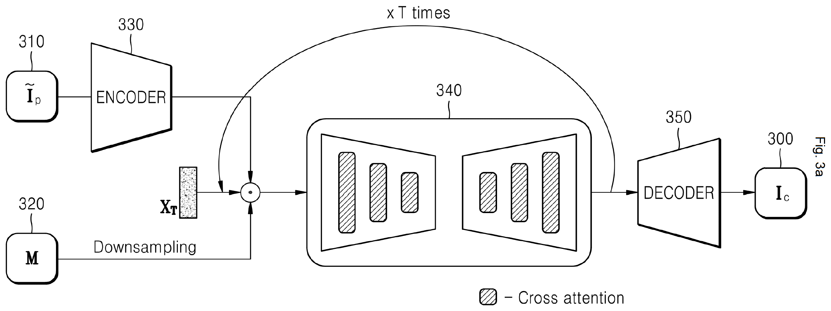

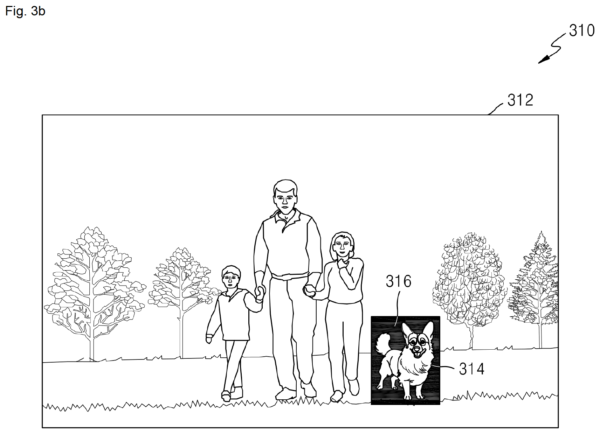

In an embodiment of the disclosure, the diffusion model may apply different image generation strengths to respective regions of an image, based on the variance of a pixel prediction space. The diffusion model may be a model to which image conditioning is applied to receive an image as input and generate a new image with reference to the input image. In addition, the diffusion model may be a model to which a classifier-free guidance (CFG) method is applied to adjust the performance of the model to which image conditioning is applied. The diffusion model will be further described in more detail with reference to FIGS. 3A and 3B.

In operation S250, the electronic device 1000 may output the composed image.

In an embodiment of the disclosure, the electronic device 1000 may display the composed image generated by using the diffusion model, on a screen through a display included in the electronic device 1000.

In an embodiment of the disclosure, the electronic device 1000 may transmit the composed image to another electronic device. For example, the electronic device 1000 may transmit the composed image to another electronic device including a display, such that the composed image is displayed on the other electronic device.

FIG. 3A is a diagram for describing an example in which an electronic device generates a composed image by using a diffusion model, according to an embodiment of the disclosure.

In an embodiment of the disclosure, the electronic device 1000 may generate a composed image 300 by using a diffusion model. The diffusion model may be an artificial intelligence model that is trained to receive, as input, a pasted image 310 and a mask image 320 that corresponds to an object, and output the composed image 300. The diffusion model may be, for example, a model that has undergone pre-training and/or fine-tuning training, and then performance verification, to be prepared to generate the composed image 300 described herein. The diffusion model may use image conditioning and CFG to generate the composed image 300 with reference to the pasted image 310 and the mask image 320, which are input images.

In an embodiment of the disclosure, the diffusion model may include an encoder 330, a noise predictor 340, and a decoder 350, but is not limited thereto. The pasted image 310 may be converted into a feature vector by the encoder 330, and the mask image 320 may be converted into a feature vector through certain preprocessing (e.g., downsampling). For example, the pasted image 310 and the mask image 320 may be converted into a form that may be processed by the noise predictor 340, and then combined with each other. The noise predictor 340 may sample initial noise *x_{T}* for an image composition operation, and generate a final feature vector by iteratively performing gradual noise prediction and removal. The final feature vector may be converted into the composed image 300 by the decoder 350.

The encoder 330 and the decoder 350 may be implemented by using a neural network architecture for compressing and decompressing data, or through a variation of the neural network architecture. The encoder 330 and the decoder 350 may be implemented based on a variational autoencoder (VAE) architecture, but are not limited thereto. The noise predictor 340 may be, for example, implemented by using a neural network architecture for predicting and removing noise to restore an image, or through a variation of the neural network architecture. For example, the noise predictor 340 may be implemented based on a U-Net architecture, but is not limited thereto. The noise predictor 340 may include an attention module that uses an attention mechanism that merges feature vectors converted from the pasted image 310 and the mask image 320 with noise images to which noise is added stepwise. For example, the noise predictor may include one or more cross-attention modules.

Hereinafter, an inference process of the diffusion model that generates the composed image 300 will be described first.

The inference process of the diffusion model is a process of finally generating the composed image 300 by using a condition image (e.g., the pasted image 310 that is an input image) and a noise image. The diffusion model may iteratively perform generating initial noise, predicting, starting from the sampled initial noise, noise for each time step, and removing the predicted noise, so as to finally obtain the composed image 300.

The diffusion model uses image conditioning, which is a method of generating a new image with reference to an input image. In FIG. 3A, the pasted image 310 is an input image to the diffusion model, and is also a condition image that the diffusion model refers to in generating the composed image 300. In addition, in a noise prediction process of the noise predictor 340, which is included in the inference process of the diffusion model, CFG using a combination of conditional prediction and unconditional prediction may be used. Conditional prediction is predicting noise under a condition (e.g., a condition image or a mask image), and unconditional prediction is predicting noise without a condition. This is expressed as Equation (1) below. ${{ϵ}^{˜}}_{θ} \left({x}_{t}, c\right) = \left(1+ω\right) {ϵ}_{θ} \left({x}_{t}, c\right) - ω {ϵ}_{θ} \left({x}_{t}\right)$ (1)

In Equation 1, *ε̃_{θ}*(*xₜ,c*) denotes combined predicted noise, *ε_{θ}*(*xₜ,c*) denotes noise predicted given a condition c, *ε_{θ}*(*xₜ*) denotes noise predicted without a condition, and *ω* denotes a guidance scale indicating a degree of condition reflection. In addition, a condition image corresponding to the condition c is the pasted image 310 and/or the mask image 320.

When noise *xₜ* at a current time point t is input, the noise predictor 340 may predict noise *ε̃_{θ}*(*xₜ,c*) at the time point t and remove the predicted noise from *xₜ* so as to obtain noise *x*_{*t*-1} at a next time point t-1. For example, the diffusion model may obtain the composed image 300 by starting with sampling initial noise *x_{T}* and then iteratively and gradually removing noise at each time point t, from t=T to t=0, so as to reach *x*₀.

FIG. 3B is a diagram for further describing features of the diffusion model illustrated in FIG. 3A, according to an embodiment of the disclosure.

FIG. 3B illustrates an example of the pasted image 310 that is used as input data for the diffusion model. The pasted image 310 may be obtained through a combination of a background image (a first image) and an object image (a second image), which are source images.

In describing FIG. 3B, a region corresponding to a background image in the pasted image 310 will be simply referred to as a first region 312. In addition, a target region in the pasted image 310 will be referred to as partitioned into a second region 314 and a third region 316. The second region 314 refers to a region corresponding to an object pasted to the background image, and the third region 316 refers to a region having no or little pixel information other than the first region 312 and the second region 314.

An image-to-image method (image conditioning and CFG) used by the diffusion model according to an embodiment of the disclosure provides stronger guidance than a text-to-image method (text conditioning and CFG). That is, the diffusion model generates an image with reference to a condition (e.g., the pasted image 310 and/or a mask image), and is thus able to compose an image such that the identity of a background image (a first image) and an object image (a second image) constituting the pasted image 310 is preserved. However, in the above-described method, an unstable composition result may appear in a partial region of a result due to the strong guidance characteristic of image conditioning. In other words, it is necessary to adjust the image generation strength when strong guidance is applied.

The diffusion model according to an embodiment of the disclosure may apply different image generation strengths to respective regions of an image based on the variance of a pixel prediction space, in order to obtain a stable composition result while applying a method using image conditioning and CFG. For example, the diffusion model may apply a high image generation strength to a region where the variance of the pixel prediction space is high, and apply a low image generation strength to a region where the variance of the pixel prediction space is low. The pixel prediction space may also be referred to as a latent space, and a variance of the pixel prediction space may also be referred to as a 'learnable variance' because it may be inferred through training of the diffusion model. In other words, the diffusion model of the disclosure uses a learnable variance to effectively apply image conditioning and CFG.

In an embodiment of the disclosure, the diffusion model may infer a difficulty level *σ_{θ}* of pixel prediction. Inference of the difficulty level of pixel prediction may be performed through the noise predictor 340. The difficulty level *σ_{θ}* of pixel prediction may be a value corresponding to a variance of a pixel prediction space (learnable variance). That the difficulty level *σ_{θ}* of pixel prediction is small means that the variance of the pixel prediction space is small, and that the difficulty level *σ_{θ}* of pixel prediction is large means that the variance of the pixel prediction space is large.

For example, when the diffusion model generates an image with reference to the pasted image 310, the first region 312 and the second region 314, where pixel information exists, have a relatively low difficulty level of pixel prediction. In other words, the difficulty level of pixel prediction that is inferred for the first region 312 and the second region 314 has a relatively small value. That the pixel information exists may mean that a variance of a pixel prediction space indicating a distribution of pixels to be predicted is relatively small, with an effect similar to the existence of ground-truth values.

In addition, for example, the third region 316, where no or little pixel information exists, has a relatively high difficulty level of pixel prediction. In other words, the difficulty level of pixel prediction that is inferred for the third region 316 has a relatively large value. That no or little pixel information exists may mean that a variance of a pixel prediction space indicating a distribution of pixels to be predicted is relatively large.

The diffusion model may apply different image generation strengths to respective regions of an image, by using difficulty levels of pixel prediction. For example, the diffusion model may clamp the range of values for a combination of conditional prediction and unconditional prediction at the final time step of the noise prediction process. This is expressed as Equation (2) below. ${\hat{ϵ}}_{θ} = clamp \left({{ϵ}^{˜}}_{θ}\left({x}_{t}, c\right),-{σ}_{θ},{σ}_{θ}\right)$ (2)

In Equation 2, *ε̂_{θ}* denotes a final result value obtained by adjusting predicted noise, *ε̃_{θ}*(*xₜ,c*) denotes combined predicted noise (a combination of conditional prediction and unconditional), and *σ_{θ}* denotes a difficulty level of pixel prediction. Interpretation of the diffusion model applying different image generation strengths to respective regions based on Equation 2 is as follows.

The difficulty level *σ_{θ}* of pixel prediction that is inferred for the first region 312 and the second region 314 is obtained as a relatively small value. In this case, because the value of *σ_{θ}* is small, there is a high probability that *ε̃_{θ}*(*xₜ,c*) will fall outside the range of [ - *σ_{θ}, σ_{θ}*]. In other words, the value of predicted noise *ε̃_{θ}*(*xₜ,c*) for the first region 312 and the second region 314 may be less than - *σ_{θ}* or greater than *σ_{θ}*. When the value of the predicted *ε̃_{θ}*(*xₜ,c*) for the first region 312 and the second region 314 is less than - *σ_{θ}*, the diffusion model may set the value of the predicted noise *ε̃_{θ}*(*xₜ,c*) to - *σ_{θ}* via thresholding. Alternatively, when the value of the predicted *ε̃_{θ}*(*xₜ,c*) for the first region 312 and the second region 314 is greater than *σ_{θ}*, the diffusion model may set the value of the predicted noise *ε̃_{θ}*(*xₜ,c*) to *σ_{θ}* via thresholding. This may mean that a low image generation strength is applied to a region where the difficulty level of pixel prediction is low and the variance of the pixel prediction space is low.

The difficulty level *σ_{θ}* of pixel prediction that is inferred for the third region 316 is obtained as a relatively large value. In this case, because the value of *σ_{θ}* large, there is a high probability that *ε̃_{θ}*(*xₜ,c*) will fall within the range of [ - *σ_{θ}, σ_{θ}*]. In other words, the value of the predicted noise *ε̃_{θ}*(*xₜ,c*) for the third region 316 remains unchanged even when thresholding is applied, or is changed to - *σ_{θ}* or *σ_{θ}*, which is relatively large. This may mean that a high image generation strength is applied to a region where the difficulty level of pixel prediction is high and the variance of the pixel prediction space is high.

Therefore, the diffusion model may apply different image generation strengths to respective regions of an image according to the variance of a pixel prediction space, by inferring a difficulty level of pixel prediction in an inference process and clamping the range of values for a combination of conditional prediction and unconditional prediction by using the difficulty level of pixel prediction.

Inferring the difficulty level *σ_{θ}* of pixel prediction, which corresponds to the variance of a pixel prediction space (learnable variance), may be performed through a training process described below.

First, the concept of a general related-art diffusion model, which is the basis of the diffusion model of the disclosure, will be described. In a forward diffusion process, the related-art diffusion model gradually adds random Gaussian noise according to schedule variables *β*₁*,...,β_{T}* for a time step t. This is expressed as Equation (3) below. Equation (3) below describes a process of generating xt by adding noise to data *xt* _{- 1} when transitioning from the time step t-1 to the time step t. $q \left({x}_{t}\left|{x}_{t - 1}\right.\right) : = N \left({x}_{t};\sqrt{1 - {β}_{t}}{x}_{t - 1},{β}_{t}I\right)$ (3)

In a reverse diffusion process, the related-art diffusion model estimates, from data xt at the time step t, data *x*_{*t* - 1} at the previous time step t-1. This is expressed as Equation (4) below. Equation (4) below describes a process of estimating data *x*_{*t* - 1} of the previous time step by removing noise from current data *xₜ,* in a reverse transition from the time step t to the time step t-1. ${p}_{θ} = \left({x}_{t - 1}\left|{x}_{t}\right.\right) : = N \left({x}_{t - 1};{μ}_{θ}\left({x}_{t}, t\right),{Σ}_{θ}\left({x}_{t}, t\right)\right)$ (4)

Based on the above concept, the related-art diffusion model uses a loss function of Equation (5) below. In a training process, the related-art diffusion model may update and optimize a parameter *θ* of the diffusion model such that the calculated value of the loss function is minimized. Equation (5) below describes a process of calculating a difference between noise *ε_{θ}*(*xₜ,t*) predicted by the model and ground-truth noise *ε* by using mean squared error (MSE). Equation (5) may be referred to as a first loss function. ${L}_{simple} \left(θ\right) = {E}_{t , {x}_{0} , ϵ} \left[{\left‖ϵ-{ϵ}_{θ}\left({x}_{t}, t\right)\right‖}^{2}\right]$ (5)

In an embodiment of the disclosure, the diffusion model of the disclosure uses an additional loss function of Equation (6) below to learn a difficulty level *σ_{θ}* of pixel prediction. Equation (6) below describes a process of calculating a difference between *σ_{θ}* and a difference *ε - ε_{θ}* between ground-truth noise and predicted noise, by using MSE. Equation (6) may be referred to as a second loss function. ${L}_{var} \left(θ\right) = {E}_{t , {x}_{0} , ϵ} \left[{\left‖{\left(ϵ-{ϵ}_{θ}\right)}^{2}{{σ}_{θ}}^{2}\right‖}^{2}\right]$ (6)

In Equation (6), as the difficulty level of pixel prediction increases, the difference between the prediction and the ground truth increases, and thus, the value of (*ε - ε_{θ}*)² increases. In addition, because the diffusion model updates and optimizes the parameter *θ* of the diffusion model such that the calculated value of the loss function is minimized, *σ_{θ}* may be a term representing the difficulty level of pixel prediction. The noise predictor of the diffusion model may process multi-channel data. The diffusion model may be trained such that noise is inferred in some of the multiple channels, and the difficulty level of pixel prediction is inferred in the other channels.

Overall, the diffusion model may be trained by using a total loss function defined as a weighted combination of the two loss functions, as shown in Equation (7) below. ${L}_{total} = {L}_{simple} + γ ⋅ {L}_{var}$ (7)

In an embodiment of the disclosure, the diffusion model of the disclosure uses image conditioning and CFG in the training and inference processes. Thus, predicted noise in the training and inference processes of the diffusion model is defined by Equation (1). In addition, the application of different image generation strengths to respective regions in the training and inference processes of the diffusion model is defined by Equation (2). By Equation (2), the ranges of predicted noise are clamped to different values for respective regions of the image, such that different image generation strengths may be applied to the respective regions of the image. This has been described above, and thus, redundant descriptions thereof will be omitted for conciseness.

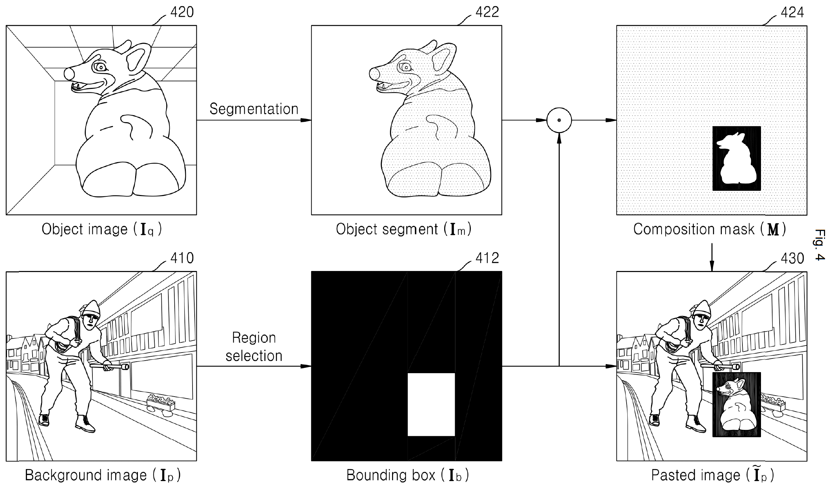

FIG. 4 is a diagram for describing an operation, performed by an electronic device, of generating input data for a diffusion model, according to an embodiment of the disclosure.

The electronic device 1000 may obtain input data for a diffusion model through an image preprocessing operation.

In an embodiment of the disclosure, the electronic device 1000 may obtain a first image 410. For example, the electronic device 1000 may obtain the first image 410 based on a user input for selecting, capturing, or downloading an image. The first image 410 may be obtained by loading an image stored in the media storage unit of the electronic device 1000, by capturing an image by using a camera of the electronic device 1000, or by receiving an image from an external source by the electronic device 1000. The first image 410 may be a background image used for image composition.

In an embodiment of the disclosure, the electronic device 1000 may obtain target region information 412 about the first image 410. For example, the electronic device 1000 may obtain the target region information 412 based on a user input for specifying a target region in the first image 410. The target region information 412 may be, for example, a bounding box image, but is not limited thereto. The target region information 412 may include information about an arbitrary shape and size specified in the first image 410 (e.g., pixel coordinates).

In an embodiment of the disclosure, the electronic device 1000 may obtain a second image 420. For example, the electronic device 1000 may obtain the second image 420 based on a user input for selecting, capturing, or downloading an image. The second image 420 may be obtained by loading an image stored in the media storage unit of the electronic device 1000, by capturing an image by using a camera of the electronic device 1000, or by receiving an image from an external source by the electronic device 1000. The second image 420 may be an object image used for image composition.

In an embodiment of the disclosure, the electronic device 1000 may obtain an object segment image 422 by isolating an object from the second image 420. For example, the electronic device 1000 may receive a user input with respect to the second image 420. The user input may be selecting an object or specifying a region including the object. The electronic device 1000 may identify a region in the second image 420 corresponding to the user input, and segment an object of the identified region to obtain the object segment image 422. The electronic device 1000 may obtain the object segment image 422 by using various methodologies for object segmentation.

In an embodiment of the disclosure, the electronic device 1000 may obtain a mask image 424 corresponding to the segmented object. The electronic device 1000 may generate the mask image 424 based on the object segment image 422. The mask image 424 may indicate whether each pixel belongs to a particular object. For example, the mask image 424 may be a binary mask. In a binary mask, a pixel value of a region indicating an object may be processed as 1, and a pixel value of a region indicating a background may be processed as 0. In an embodiment of the disclosure, the electronic device 1000 may adjust at least one of the position or size of a mask in the mask image 424, based on the target region information 412. For example, the electronic device 1000 may modify the position and size of the mask in the mask image 424 to correspond to the target region information 412.

In an embodiment of the disclosure, the electronic device 1000 may obtain a pasted image 430. The electronic device 1000 may generate the pasted image 430 based on the object segment image 422, the mask image 424, and the target region information 412. The pasted image 430 may be an image in which the object of the second image 420 is pasted within the target region of the first image 410. In an embodiment of the disclosure, the electronic device 1000 may delete pixel information about a region other than the segmented object within the target region of the pasted image 430, based on mask information about the mask image 424.

The mask image 424 and the pasted image 430 both obtained by the electronic device 1000 may be used as input data for the diffusion model. This has been described above, and thus, redundant descriptions thereof will be omitted.

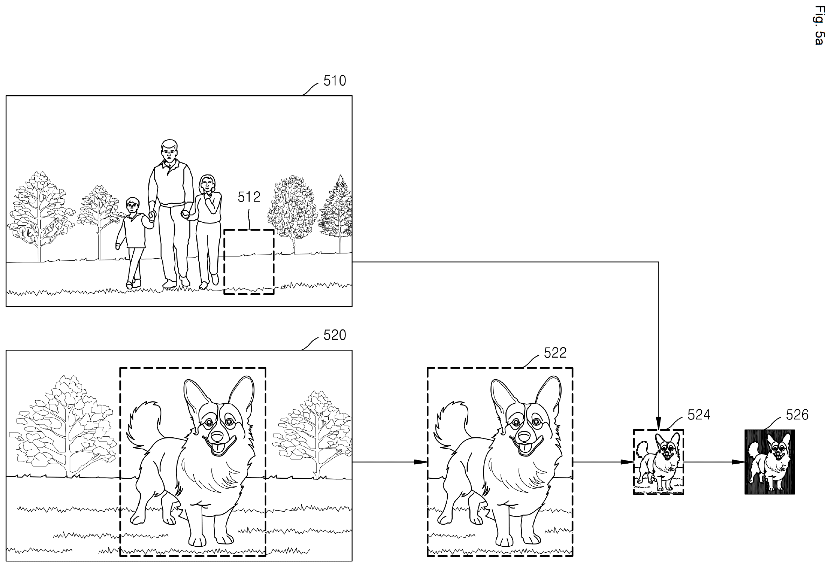

FIG. 5A is a diagram for describing an example in which an electronic device generates a composed image, according to an embodiment of the disclosure.

In an embodiment of the disclosure, the electronic device 1000 may determine a target region 512 within a first image 510. The first image 510 is an image to be referenced as a background in a composed image, and the target region 512 may indicate a region where a new object is to be combined. The target region 512 may be determined based on a user input.

The electronic device 1000 may extract an object image 522 from a second image 520. The second image 520 may be an image including an object to be included in the composed image. The electronic device 1000 may obtain an adjusted object image 524 by adjusting the size of the object image 522 to fit the size of the target region 512. In addition, the electronic device 1000 may obtain a segmented object image 526 from the adjusted object image 524. The segmented object image 526 may be an image in which pixel information about a region other than the object is deleted.

In addition, although the above-described processes have been described by way of example, including extracting the object image 522, adjusting the image size, and then segmenting the object, the method of obtaining the segmented object image 526 is not limited thereto. The electronic device 1000 may first segment the object from the object image 522 and adjust the image size after the segmentation.

The electronic device 1000 may paste the segmented object image 526 to the target region 512 of the first image 510 to obtain a pasted image to be used as input data for the diffusion model.

In addition, although FIG. 5A illustrates one first image 510 and one second image 520, there may be one or more image sources to be combined with each other. The electronic device 1000 may combine a plurality of images with each other in the same or similar manner as the above-described processes. A pasted image obtained by combining a plurality of images with each other may be used as input data for the diffusion model.

For example, one or more second images 520 (e.g., object images) may be pasted to one first image 510 (e.g., a background image). In this case, a plurality of target regions may be determined within the first image 510. The plurality of target regions may be determined based on a user input. The plurality of target regions may have different sizes. For example, a first object may be combined with a first target region, and a second object may be combined with a second target region. In a case in which a plurality of target regions are determined within the first image 510, the same or different objects may be pasted to the respective target regions. For example, an object included in the object image 522 within the second image 520 may be pasted to all of a plurality of target regions. For example, objects respectively included in a plurality of second images (including the illustrated second image 520) may be pasted to a plurality of target regions, respectively. The electronic device 1000 may segment one or more objects from each of a plurality of second images. The electronic device 1000 may obtain a pasted image by pasting, to the first image 510, the objects segmented respectively from the plurality of second images. The electronic device 1000 may obtain mask images corresponding to the objects segmented respectively from the plurality of second images. Object segmentation and mask image generation have been described above, and thus, redundant descriptions thereof will be omitted for conciseness.

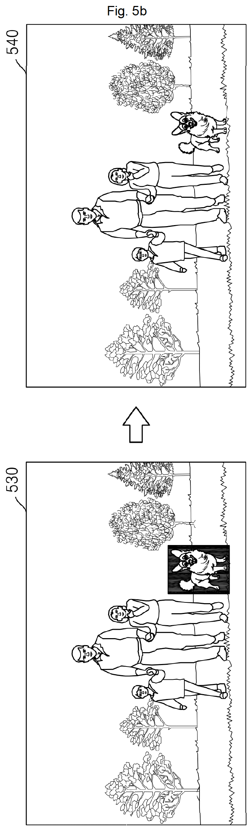

FIG. 5B is a diagram for describing an example in which an electronic device generates a composed image, according to an embodiment of the disclosure.

The electronic device may input, to the diffusion model, a pasted image 530 and a mask image corresponding to an object in the pasted image 530, to obtain a composed image 540 output from the diffusion model.

The composed image 540 may show a composition result in which a background and the object are naturally harmonized, while preserving the identity of each of the first image 510 and the second image 520 (e.g., the segmented object image 526) both included in the pasted image 530.

To this end, the diffusion model may have been trained such that different image generation strengths are applied to respective regions of an image, based on the variance of a pixel prediction space. For example, in the pasted image 530, a background region excluding the target region 512, and a segmented object region within the target region 512 are input as reference data to the diffusion model, and thus correspond to regions where the difficulty levels of pixel prediction are low. The diffusion model may apply a low image generation strength to a region where the difficulty level of pixel prediction is low. That the difficulty level of pixel prediction is low may mean that the variance of a pixel prediction space is low. Thus, the diffusion model may allow a low image generation strength to be generated for a region where the variance of a pixel prediction space is low.

In addition, the region excluding the segmented object within the target region 512 is a region where pixel information is deleted, resulting in no or little pixel information, and thus corresponds to a region where the difficulty level of pixel prediction is high. The diffusion model may apply a high image generation strength to a region where the difficulty level of pixel prediction is high. That the difficulty level of pixel prediction is high may mean that the variance of a pixel prediction space is high. Thus, the diffusion model may allow a high image generation strength to be generated for a region where the variance of a pixel prediction space is high.

The diffusion model may output the composed image 540 that shows an overall harmonious composition result, while applying different image generation strengths to respective regions of the image.

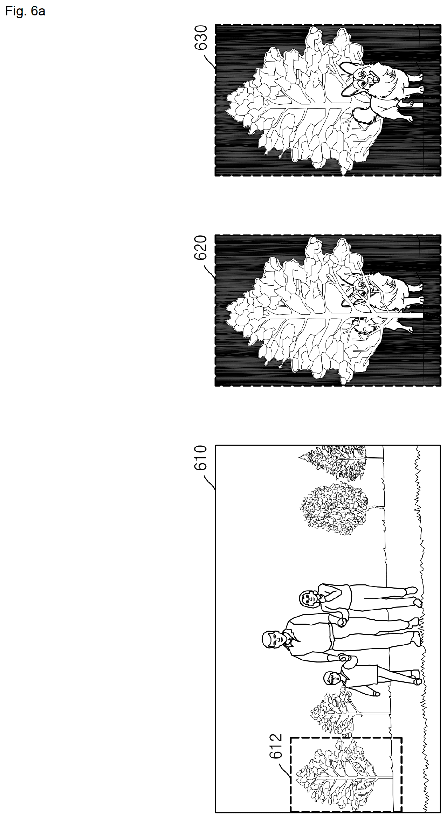

FIG. 6A is a diagram for describing an example in which an electronic device generates a composed image, according to an embodiment of the disclosure.

In an embodiment of the disclosure, for a target region 612 determined within a first image 610, the electronic device 1000 may identify an object included in the target region 612. For example, the electronic device 1000 may segment an object within the target region 612. The electronic device 1000 may segment an object within the target region 612 by using thresholding, boundary detection, artificial intelligence-based segmentation techniques, and the like, but is not limited thereto. For example, the electronic device 1000 may segment a 'tree', which is an object within the target region 612.

The electronic device 1000 may determine the front/back arrangement of an object within the target region 612 and an object to be combined with the target region 612. The object to be combined with the target region 612 may refer to an object selected from a second image, which is an object image. For example, the electronic device 1000 may arrange, based on a user input, the object included in the second image to be in front of or behind the object within the target region 612. The electronic device 1000 may consider a pasted image in which the object included in the second image is arranged to be in front of or behind the object within the target region 612.

For example, in a first arrangement 620, the object included in the second image may be arranged behind the object within the target region 612, based on a user input. In detail, in the first arrangement 620, an object 'dog' included in the second image may be arranged to be behind an object 'tree' within the target region 612. As another example, in a second arrangement 630, the object included in the second image may be arranged to be in front of the object within the target region 612, based on a user input. In detail, in the second arrangement 630, an object 'dog' included in the second image may be arranged to be in front of the object 'tree' within the target region 612.

In an embodiment of the disclosure, the electronic device 1000 may combine a plurality of images with each other. For example, one or more second images (e.g., object images) may be pasted to one first image 610, which is a background image. In other words, in addition to the illustrated target region 612, other target regions may be determined. The electronic device 1000 may determine, for each of a plurality of target regions, whether an object is included in the target region. Based on an object within the target region being identified, the electronic device 1000 may receive a user input with respect to a target region where the object is identified, from among the plurality of target regions. The electronic device 1000 may adjust, based on a user input, the front/back arrangement of an object to be combined with the target region, and an object already existing within the target region.

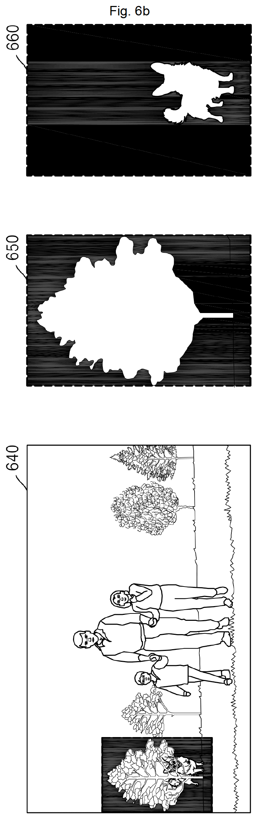

FIG. 6B is a diagram for describing an example in which an electronic device generates a composed image, according to an embodiment of the disclosure.

The electronic device 1000 may generate a composed image in which source images are naturally combined with each other, by using the diffusion model.

In an embodiment of the disclosure, when the electronic device 1000 generates a composed image by using the diffusion model, in a case in which an object already exists within a target region, the electronic device 1000 may adjust, based on a user input, the front/back arrangement of the object within the target region and an object to be newly combined.

When the electronic device 1000 generates an image by using the diffusion model, a mask image corresponding to an object to be combined is used as input data, in addition to an input image. In a case in which an object already exists within a target region, the electronic device 1000 may generate a mask image corresponding to each object. For example, the electronic device 1000 may additionally generate a mask image corresponding to the object within the target region, and further use the mask image corresponding to the object within the target region, as input data for the diffusion model.

For example, the electronic device 1000 may generate a pasted image 640, a first mask image 650, and a second mask image 660, which are input data for the diffusion model.

The pasted image 640 may refer to an image in which a second image (e.g., an object image) is pasted to a target region of a first image (e.g., a background image). In the example illustrated in FIG. 6B, in a target region of the pasted image 640, an object 'tree' existing within the target region is arranged to be in front, and a pasted object 'dog' is arranged to be behind the 'tree'. The front/back arrangement between the objects may have been adjusted based on a user input.

The first mask image 650 may be a mask image corresponding to an object already existing within the target region of the first image. The electronic device 1000 may segment an object within the target region, based on target region information. The electronic device 1000 may obtain the first mask image 650 by separately processing a region indicating the object and other regions, based on segmented object information.

The second mask image 660 may be a mask image corresponding to an object included in the second image. The electronic device 1000 may segment an object within the second image, based on a user input. The electronic device 1000 may obtain the second mask image 660 by separately processing a region indicating the object and other regions, based on segmented object information.

In an embodiment of the disclosure, in a case in which an object exists within the target region, the electronic device 1000 may use a mask image corresponding to the object within the target region, as additional input data for the diffusion model. For example, in the example of FIG. 6B, the pasted image 640, the first mask image 650, and the second mask image 660 may be used as input data for the diffusion model. Based on the pasted image 640, the first mask image 650, and the second mask image 660, the diffusion model may apply different image generation strengths to respective regions of the image. This has been described above, and thus, redundant descriptions thereof will be omitted for conciseness.

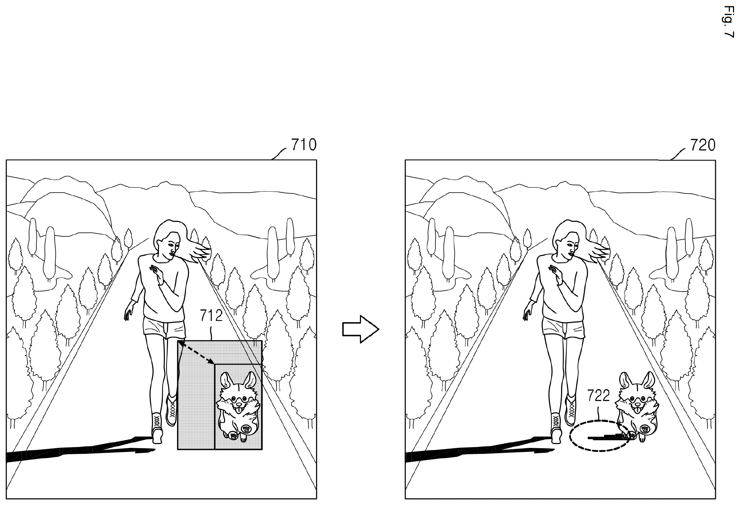

FIG. 7 is a diagram for describing an example in which an electronic device generates a composed image, according to an embodiment of the disclosure.

In an embodiment of the disclosure, the electronic device 1000 may generate, by using the diffusion model, a graphic effect representing an interaction between a combined object and a region in proximity to the object, within a composed image.

For example, the electronic device 1000 may receive a user input with respect to a pasted image 710. The user input may be for adjusting at least one of the position or size of a target region 712. The electronic device 1000 may adjust, based on the user input, at least one of the position or size of the target region 712.

A region other than an object within the target region 712 is a region to which the diffusion model applies a high image generation strength. Thus, when the size and/or position of the target region 712 is adjusted, the size and/or position of a region where the diffusion model strongly generates an image may be adjusted. The electronic device 1000 may generate, by using the diffusion model, a graphic effect representing an interaction between an object and a region in proximity to the object, based on the pasted image 710 including the adjusted target region 712. For example, the electronic device 1000 may input, to the diffusion model, the pasted image 710 including the adjusted target region 712. The electronic device 1000 may obtain a composed image 720 output from the diffusion model. In this case, the diffusion model may generate, based on the adjusted target region 712, a graphic effect representing an interaction between a segmented object and a region in proximity to the object. For example, the diffusion model may generate the composed image 720 including a shadow 722 of the object.

In an embodiment of the disclosure, the electronic device 1000 may train the diffusion model to generate a graphic effect. For example, to allow the diffusion model to generate a shadow, the electronic device 1000 may train the diffusion model based on a training dataset including pairs of {image without shadow, image with shadow}. An image without a shadow may be generated from an image with a shadow. For example, the electronic device 1000 may obtain an image without a shadow by extracting a pair of an object and a shadow from an image with a shadow, erasing a shadow region from the image with the shadow, and then filling the erased region by using an inpainting model.

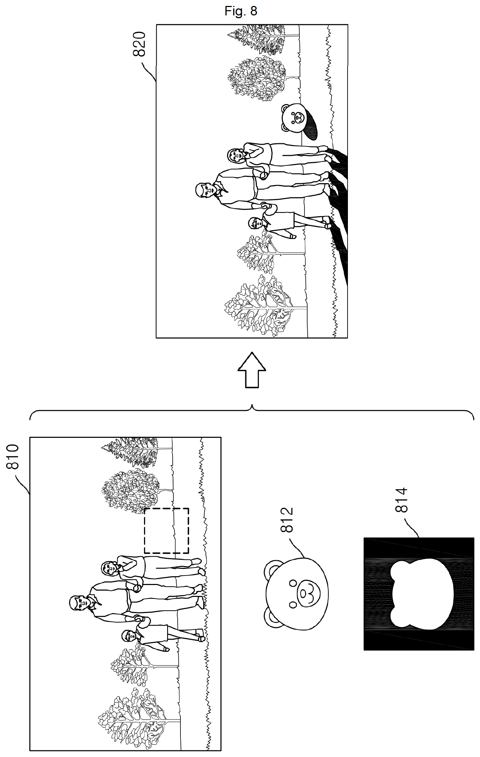

FIG. 8 is a diagram for describing an example in which an electronic device generates a composed image, according to an embodiment of the disclosure.

In an embodiment of the disclosure, the electronic device 1000 may generate an image by using a previously segmented object. For example, the electronic device 1000 may obtain a composed image 820 based on a first image 810, a second image 812 that is a segmented object, and a mask image 814 corresponding to the segmented object.

When the electronic device 1000 generates an image by using the diffusion model, the first image 810 may be a background image, and the second image 812 may be an image of a previously segmented object. The segmented object may be, for example, an independently isolated object image, such as an emoji, a sticker, an icon, or a character, but is not limited thereto. In a case in which the second image 812 is an image of a previously segmented object, an operation, performed by the electronic device 1000, of segmenting an object from the second image 812 may be omitted. The electronic device 1000 may generate the mask image 814 corresponding to the segmented object.

The electronic device 1000 may identify a target region within the first image 810, based on a user input with respect to the first image 810. The electronic device 1000 may adjust the size of the second image 812 based on target region information. The electronic device 1000 may paste the resized second image 812 to the target region of the first image 810, and input the pasted image and the mask image 814 to the diffusion model to obtain the composed image 820.

In addition, even in a case in which the segmented object is a virtual object (e.g., an emoji) rather than a real object (e.g., an object in a photograph) as illustrated in FIG. 8, the electronic device 1000 may generate a graphic effect representing an interaction between the combined object and a region in proximity to the object. For example, in the composed image 820, even the combined emoji may be generated to include a shadow, and thus, a result may be obtained in which the combined image is naturally harmonized with the background image.

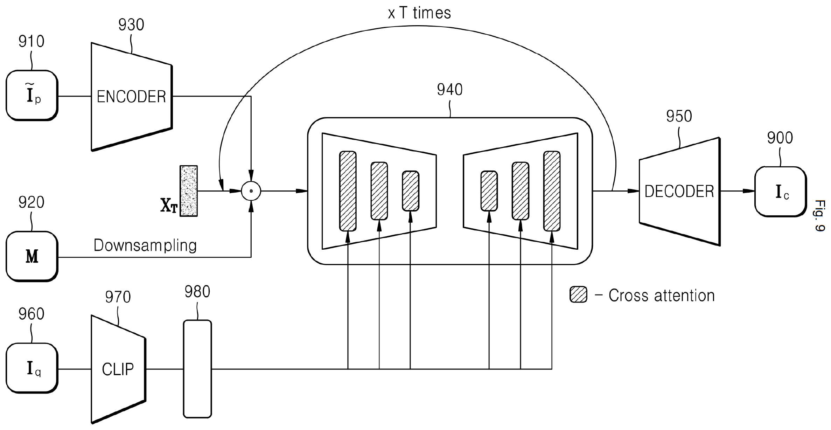

FIG. 9 is a diagram for describing an example in which an electronic device generates a composed image by using a diffusion model, according to an embodiment of the disclosure.

In an embodiment of the disclosure, when generating an image, the electronic device 1000 may use additional data as input data for the diffusion model. For example, the electronic device 1000 may further use a second image 960, which is an object image, as input data for the diffusion model. The diffusion model may be an artificial intelligence model trained to receive, as input, a pasted image 910, a mask image 920 corresponding to an object, and the second image 960, which is an object image, and output a composed image 900. The diffusion model may be a model that has undergone pre-training and/or fine-tuning training, and then performance verification, to be prepared to generate the composed image 900 described herein. The diffusion model may use image conditioning and CFG to generate the composed image 900 with reference to the pasted image 910 and the mask image 920, which are input images.

In an embodiment of the disclosure, the diffusion model may include, but is not limited to, an encoder 930, a noise predictor 940, a decoder 950, a contrastive language-image pre-training (CLIP) model 970, and an adapter 980. The encoder 930, the noise predictor 940, and the decoder 950 of FIG. 9 correspond to the encoder 330, the noise predictor 340, and the decoder 350 of FIG. 3A, respectively, and thus, redundant descriptions thereof will be omitted for conciseness.

The CLIP model 970 may convert an image to generate a feature vector. The CLIP model 970 may be trained to find a relationship between text and an image and generate a common vector representation between the text and the image. Taking the text 'dog' and a 'dog image' as an example, the CLIP model 970 may receive the text 'dog' as input and convert it into a feature vector, or receive the 'dog image' as input and convert it into a feature vector. Here, the feature vector generated by the CLIP model 970, whether it is a feature vector converted from the text or a feature vector converted from the image, may include a common vector representation indicating the information 'dog'.

The adapter 980 may change the dimension of the feature vector output from the CLIP model 970 such that the feature vector may be input to the noise predictor 940. The output of the adapter 980 may be input to one or more cross-attention blocks included in the noise predictor 940.

The diffusion model according to an embodiment of the disclosure may use the second image 960 as additional input data, so as to allow an object in the second image 960 to be more accurately reflected in the composed image 900. The electronic device 1000 may automatically use the second image 960 as input data for the diffusion model when a user input for selecting the second image 960 is received, or may allow the second image 960 to be input to the diffusion model based on selection of an option to allow the second image 960 to be additionally input to the diffusion model.

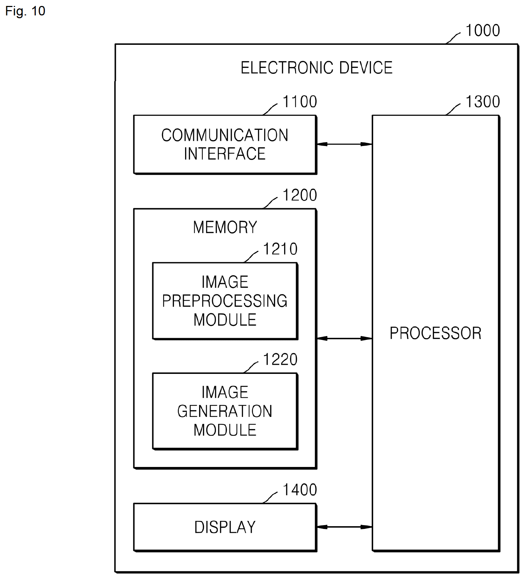

FIG. 10 is a block diagram illustrating a configuration of an electronic device according to an embodiment of the disclosure.

In an embodiment of the disclosure, the electronic device 1000 may include a communication interface 1100, a memory 1200, a processor 1300, and a display 1400.

The communication interface 1100 may perform data communication with other electronic devices, under control of the processor 1300. The communication interface 1100 may include a communication circuit.

The communication interface 1100 may perform data communication between the electronic device 1000 and another electronic device (e.g., a server 2000) by using at least one of data communication methods including, for example, wired local area network (LAN) (e.g., Ethernet), wireless LAN (e.g., Wi-Fi), a cellular network (e.g., fourth-generation (4G) or fifth-generation (5G)), Bluetooth, Bluetooth Low Energy (BLE), ZigBee, Infrared Data Association (IrDA), near-field communication (NFC), radio-frequency (RF) communication, and other various types of known wireless/wired communication technologies.

The electronic device 1000 may transmit and receive data for generating a composed image to and from another electronic device (e.g., the server 2000), by using the communication interface 1100. For example, the electronic device 1000 may transmit and receive source images (e.g., a first image and a second image) and/or a composed image to and from another electronic device, and may receive a diffusion model for image composition from another electronic device.

The memory 1200 may include various types of memory. The memory 1200 may include a flash memory-type memory, a hard disk-type memory, a multimedia card micro-type memory, a card-type memory (e.g., an SD memory, an XD memory, etc.), a non-volatile memory including at least one of read-only memory (ROM), electrically erasable programmable ROM (EEPROM), programmable ROM (PROM), a magnetic memory, a magnetic disk, or an optical disk, and a volatile memory such as random-access memory (RAM) or static RAM (SRAM).

The memory 1200 may store instruction(s) and/or program(s) that cause the electronic device 1000 to operate to generate and provide a composed image. For example, the memory 1200 may store instructions and a program for implementing functions of an image preprocessing module 1210 and an image generation module 1220. The modules stored in the memory 1200 are for convenience of description, and the disclosure is not limited thereto. Other modules may be added to implement the above-described embodiments, and some modules may be omitted. In addition, one module may be divided into a plurality of modules distinguished from each other according to their detailed functions, and some of the above-described modules may be combined and implemented as one module.

The processor 1300 may control overall operations of the electronic device 1000. The processor 1300 may include processing circuitry. For example, the processor 1300 may execute one or more instructions of a program stored in the memory 1200 to control overall operations for the electronic device 1000 to provide a composed image. One or more processors 1300 may be provided.

For example, the processor 1300 may include, but is not limited to, at least one of a central processing unit (CPU), a microprocessor, a graphics processing unit (GPU), an application-specific integrated circuit (ASIC), a digital signal processor (DSP), a digital signal processing device (DSPD), a programmable logic device (PLD), a field-programmable gate array (FPGA), an application processor (AP), a neural processing unit (NPU), or a dedicated artificial intelligence processor designed in a hardware structure specialized for processing an artificial intelligence model.

The processor 1300 may execute the image preprocessing module 1210 to preprocess source images to be used as input data for the diffusion model. For example, the processor 1300 may use the image preprocessing module 1210 to generate a pasted image in which a first image (a background image) and a second image (an object image) are pasted, and to generate a mask image corresponding to an object within the second image. The description related to the operations of the image preprocessing module 1210 has been provided above in the description of the previous drawings, and thus, redundant descriptions thereof will be omitted.

The processor 1300 may execute the image generation module 1220 to generate a composed image. The image generation module 1220 may include a diffusion model. The diffusion model may be a data file including model structure information defining architectures such as an encoder, a decoder, a noise predictor, a CLIP model, or an adapter, and weights and parameters. The description related to the operations in which the image generation module 1220 generates an image by using the diffusion model has provided above in the description of the previous drawings, and thus, redundant descriptions thereof will be omitted.

In a case in which one or more processors 1300 are provided, the operations of the disclosure may be performed by the one or more processors individually or collectively executing instructions and/or a program stored in the memory 1200. In a case in which a method according to an embodiment of the disclosure includes a plurality of operations, the plurality of operations may be performed by one processor 1300 or by a plurality of processors 1300.

For example, when a first operation, a second operation, and a third operation are performed by the method according to an embodiment of the disclosure, the first operation, the second operation, and the third operation may all be performed by a first processor, or some of the first to third operations may be performed by the first processor (e.g., a general-purpose processor) and the other operations may be performed by a second processor (e.g., a dedicated artificial intelligence processor). Here, a dedicated artificial intelligence processor, which is an example of the second processor, may perform operations for learning/inference of an artificial intelligence model. However, an embodiment of the disclosure is not limited thereto.

The one or more processors according to the disclosure may be implemented as a single-core processor or a multi-core processor. In a case in which a method according to an embodiment of the disclosure includes a plurality of operations, the plurality of operations may be performed by one core or by a plurality of cores included in the one or more processors.

The display 1400 may output an image signal on a screen of the electronic device 1000, under control of the processor 1300. For example, the display 1400 may output, on a screen, an image signal processed in a process in which the electronic device 1000 provides a composed image, such as an image list for selection of source images (e.g., a first image and a second image), an image search result, a selected image, or a result of generating a composed image. The display 1400 may include a touch panel. The touch panel may include one or more touch sensors configured to detect a touch input. In an embodiment of the disclosure, a user input may be input through the touch panel.

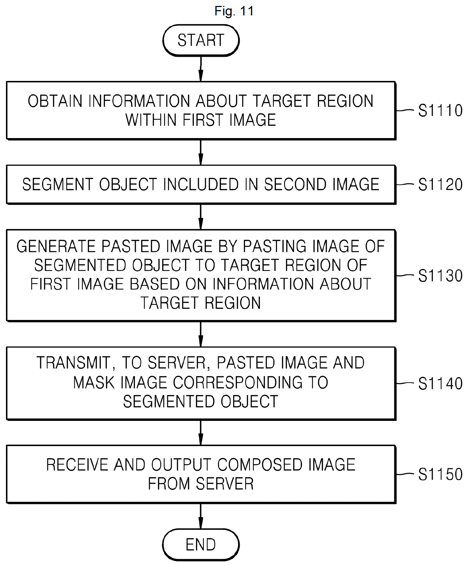

FIG. 11 is a flowchart for describing an electronic device operating in conjunction with a server, according to an embodiment of the disclosure.

In an embodiment of the disclosure, the electronic device 1000 may operate by using a cloud-based artificial intelligence (AI) method in which a composed image is received from a diffusion model executed on the server 2000, rather than operating an on-device diffusion model to generate a composed image.

Operations S1110, S1120, and S1130 of FIG. 11 may correspond to operations S210, S220, and S230 of FIG. 2, respectively. Thus, redundant descriptions will be omitted for conciseness.

In operation S1140, the electronic device 1000 may transmit, to the server 2000, the pasted image and a mask image corresponding to the segmented object.

In an embodiment of the disclosure, in a case in which an object is identified in a target region within the first image and the front/back arrangement of the object within the target region and an object in the second image is considered, the electronic device 1000 may transmit, to the server 2000, a mask image corresponding to the object within the target region.

In an embodiment of the disclosure, in a case in which the second image is used as additional input data for the diffusion model, the electronic device 1000 may transmit the second image to the server 2000.

In operation S1150, the electronic device 1000 may receive, from the server 2000, a generated composed image. The electronic device 1000 may output the received composed image. For example, the electronic device 1000 may display the composed image on a screen of the electronic device 1000, or transmit the composed image to another electronic device 1000.

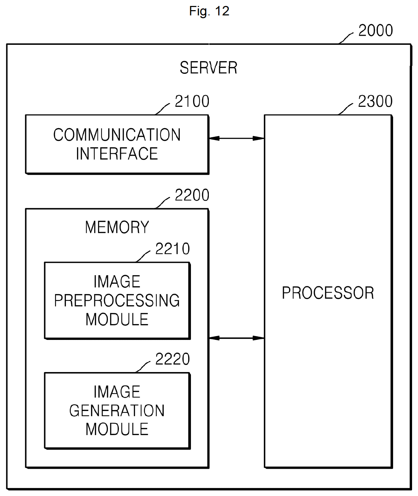

FIG. 12 is a block diagram illustrating a configuration of a server according to an embodiment of the disclosure.

In an embodiment of the disclosure, the server 2000 may include a communication interface 2100, a memory 2200, and a processor 2300. The operations of the electronic device 1000 described above with reference to the previous drawings may be performed by the server 2000.

The communication interface 2100, the memory 2200, and the processor 2300 of the server 2000 of FIG. 12 may correspond to the communication interface 1100, the memory 1200, and the processor 1300 of the electronic device 1000 of FIG. 10, respectively. Thus, redundant descriptions will be omitted for conciseness.

The disclosure relates to a method, electronic device, and server for generating and providing a composed image by using a diffusion model. The diffusion model may be a model using image conditioning and CFG. The diffusion model may be configured to apply different image generation strengths to respective regions of an image, according to the variance of a pixel prediction space. The technical objectives of the disclosure are not limited to those mentioned above, and other technical objectives not mentioned herein may be clearly understood by those of skill in the art to which the disclosure pertains from the description herein.

According to an aspect of the disclosure, there may be provided a method, performed by an electronic device, of composing an image.

The method may include obtaining information about a target region within a first image.

The method may include segmenting an object included in a second image.

The method may include generating a pasted image by pasting an image of the segmented object to the target region of the first image, based on the information about the target region.

The method may include generating a composed image by using a diffusion model configured to use, as input data, the pasted image and a mask image that corresponds to the segmented object.

The method may include outputting the composed image.

The diffusion model may be further configured to apply different image generation strengths to respective regions of an image, based on a variance of a pixel prediction space.

In the pasted image, pixel information about a region other than the segmented object within the target region may be deleted.

The obtaining of the target region information may include receiving a first user input for selecting the target region in the first image.

The segmenting of the object may include receiving a second user input for selecting the object in the second image.

The method may include identifying an object included in the target region.

The method may include arranging, based on a third user input, the object included in the second image to be in front of or behind the object within the target region.

The generating of the composed image may include generating the composed image by further using, as input data for the diffusion model, a mask image corresponding to the object within the target region.

The method may include adjusting, based on a fourth user input with respect to the pasted image, at least one of a position or a size of the target region.

The generating of the composed image may include generating, based on the adjusted target region, a shadow of the segmented object.

The generating of the composed image may include generating the composed image by further using the second image as input data for the diffusion model.

The generating of the composed image may include generating initial noise, and generating the composed image by iteratively performing, starting from the initial noise, noise prediction and removal of predicted noise for respective time steps.

The noise prediction may use a combination of conditional prediction using the pasted image as a condition, and unconditional prediction.

The generating of the composed image may include inferring a difficulty level of pixel prediction, and clamping a range of values for the combination of the conditional prediction and the unconditional prediction at a final time step of the noise prediction, by using the difficulty level of pixel prediction.

According to an aspect of the disclosure, there may be provided an electronic device for composing an image.

The electronic device may include a communication interface, memory, comprising one or more storage media, storing instructions, and at least one processor communicatively coupled to the communication interface and the memory. The electronic device may include a display.

The instructions may, when executed by the at least one processor, cause the electronic device to obtain information about a target region within a first image.

The instructions may, when executed by the at least one processor, cause the electronic device to segment an object included in a second image.

The instructions may, when executed by the at least one processor, cause the electronic device to generate a pasted image by pasting an image of the segmented object to the target region of the first image, based on the information about the target region.

The instructions may, when executed by the at least one processor, cause the electronic device to generate a composed image by using a diffusion model configured to use, as input data, the pasted image and a mask image that corresponds to the segmented object.

The instructions may, when executed by the at least one processor, cause the electronic device to output the composed image.

The instructions may, when executed by the at least one processor, cause the electronic device to control the display to output the composed image.

The diffusion model may be further configured to apply different image generation strengths to respective regions of an image, based on a variance of a pixel prediction space.

In the pasted image, pixel information about a region other than the segmented object within the target region may be deleted.

The instructions may, when executed by the at least one processor, cause the electronic device to receive a first user input for selecting the target region in the first image.

The instructions may, when executed by the at least one processor, cause the electronic device to receive a second user input for selecting the object in the second image.

The instructions may, when executed by the at least one processor, cause the electronic device to identify an object included in the target region.

The instructions may, when executed by the at least one processor, cause the electronic device to arrange, based on a third user input, the object included in the second image to be in front of or behind the object within the target region.

The instructions may, when executed by the at least one processor, cause the electronic device to generate the composed image by further using, as input data for the diffusion model, a mask image corresponding to the object within the target region.

The instructions may, when executed by the at least one processor, cause the electronic device to adjust, based on a fourth user input with respect to the pasted image, at least one of a position or a size of the target region.

The instructions may, when executed by the at least one processor, cause the electronic device to generate, based on the adjusted target region, a shadow of the segmented object.

The instructions may, when executed by the at least one processor, cause the electronic device to generate the composed image by further using the second image as input data for the diffusion model.

The instructions may, when executed by the at least one processor, cause the electronic device to generate initial noise, and generate the composed image by iteratively performing, starting from the initial noise, noise prediction and removal of predicted noise for respective time steps.

The noise prediction may use a combination of conditional prediction using the pasted image as a condition, and unconditional prediction.

The instructions may, when executed by the at least one processor, cause the electronic device to infer a difficulty level of pixel prediction, and clamp a range of values for the combination of the conditional prediction and the unconditional prediction at a final time step of the noise prediction, by using the difficulty level of pixel prediction.

Embodiments of the disclosure may be implemented as a recording medium including computer-executable instructions such as a computer-executable program module. The computer-readable medium may be any available medium which is accessible by a computer, and may include a volatile or non-volatile medium and a detachable and non-detachable medium. Also, the computer-readable medium may include a computer storage medium and a communication medium. The computer storage media include both volatile and non-volatile, detachable and non-detachable media implemented in any method or technique for storing information such as computer readable instructions, data structures, program modules or other data. The communication medium may typically include computer-readable instructions, data structures, or other data of a modulated data signal such as program modules.

In addition, the computer-readable storage medium may be provided in the form of a non-transitory storage medium. Here, the term 'non-transitory' merely means that the storage medium does not refer to a transitory electrical signal but is tangible, and does not distinguish whether data is stored semi-permanently or temporarily on the storage medium. For example, the 'non-transitory storage medium' may include a buffer in which data is temporarily stored.

According to an embodiment of the disclosure, methods according to various embodiments of the disclosure may be included in a computer program product and then provided. The computer program product may be traded as commodities between sellers and buyers. The computer program product may be distributed in the form of a machine-readable storage medium (e.g., a compact disc ROM (CD-ROM)), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

The above description of the disclosure is provided for illustration, and it will be understood by those of ordinary skill in the art that changes in form and details may be readily made therein without departing from technical idea or essential features of the disclosure. Therefore, it should be understood that the above-described embodiments of the disclosure are exemplary in all respects and do not limit the scope of the disclosure. For example, each element described in a single type may be executed in a distributed manner, and elements described distributed may also be executed in an integrated form.

The scope of the disclosure is not defined by the detailed description of the disclosure but by the following claims, and all modifications or alternatives derived from the technical idea and scope of the claims and equivalents thereof fall within the scope of the disclosure.

## Claims

1. A method of image composition performed by an electronic device, the method comprising:
obtaining information about a target region within a first image;
segmenting an object included in a second image;
generating a pasted image by pasting an image of the segmented object to the target region of the first image, based on the information about the target region;
generating a composed image by using a diffusion model configured to use, as input data, the pasted image and a mask image that corresponds to the segmented object; and
outputting the composed image,
wherein the diffusion model is further configured to apply different image generation strengths to respective regions of an image, based on a variance of a pixel prediction space.

2. The method of claim 1,
wherein the obtaining of the target region information comprises receiving a first user input for selecting the target region in the first image, and
wherein the segmenting of the object comprises receiving a second user input for selecting the object in the second image.

3. The method of claim 2, further comprising:
identifying an object included in the target region; and
arranging, based on a third user input, the object included in the second image to be in front of or behind the object within the target region.

4. The method of claim 3, wherein the generating of the composed image comprises generating the composed image by further using, as the input data for the diffusion model, a mask image corresponding to the object within the target region.

5. The method of claim 1, further comprising adjusting, based on a fourth user input with respect to the pasted image, at least one of a position or a size of the target region,
wherein the generating of the composed image comprises generating, based on the adjusted target region, a shadow of the segmented object.

6. The method of claim 1, wherein the generating of the composed image comprises:
generating initial noise; and
generating the composed image by iteratively performing, starting from the initial noise, noise prediction and removal of predicted noise for respective time steps,
wherein the noise prediction uses a combination of conditional prediction using the pasted image as a condition, and unconditional prediction.

7. The method of claim 6, wherein the generating of the composed image further comprises:
inferring a difficulty level of pixel prediction; and
clamping a range of values for the combination of the conditional prediction and the unconditional prediction at a final time step of the noise prediction, by using the difficulty level for the pixel prediction.

8. An electronic device for composing an image, the electronic device comprising:
a communication interface;
memory, comprising one or more storage media, storing instructions; and
at least one processor communicatively coupled to the communication interface and the memory,
wherein the instructions, when executed by the at least one processor, cause the electronic device to:
obtain information about a target region within a first image,
segment an object included in a second image,
generate a pasted image by pasting an image of the segmented object to the target region of the first image, based on the information about the target region, generate a composed image by using a diffusion model configured to use, as input data, the pasted image and a mask image that corresponds to the segmented object, and
output the composed image, and
wherein the diffusion model is further configured to apply different image generation strengths to respective regions of an image, based on a variance of a pixel prediction space.

9. The electronic device of claim 8, wherein the instructions, when executed by the at least one processor, cause the electronic device to:
receive a first user input for selecting the target region in the first image, and
receive a second user input for selecting the object in the second image.

10. The electronic device of claim 9, wherein the instructions, when executed by the at least one processor, cause the electronic device to:
identify an object included in the target region, and
arrange, based on a third user input, the object included in the second image to be in front of or behind the object within the target region.

11. The electronic device of claim 10, wherein the instructions, when executed by the at least one processor, cause the electronic device to:
generate the composed image by further using, as the input data for the diffusion model, a mask image corresponding to the object within the target region.

12. The electronic device of claim 8, wherein the instructions, when executed by the at least one processor, cause the electronic device to:
adjust, based on a fourth user input with respect to the pasted image, at least one of a position or a size of the target region, and
generate, based on the adjusted target region, a shadow of the segmented object.

13. The electronic device of claim 8, wherein the instructions, when executed by the at least one processor, cause the electronic device to:
generate initial noise, and
generate the composed image by iteratively performing, starting from the initial noise, noise prediction and removal of predicted noise for respective time steps, and
wherein the noise prediction uses a combination of conditional prediction using the pasted image as a condition, and unconditional prediction.

14. The electronic device of claim 13, wherein the instructions, when executed by the at least one processor, cause the electronic device to:
infer a difficulty level of pixel prediction, and
clamp a range of values for the combination of the conditional prediction and the unconditional prediction at a final time step of the noise prediction, by using the difficulty level for the pixel prediction.

15. A computer-readable recording medium having recorded thereon a program for causing a computer to execute the method of any one of claims 1 to 7.
